# NEUE EUROPÄISCHE PATENTSCHRIFT

(11) **EP 0 477 742 B2**
(45) Veröffentlichungstag und Bekanntmachung des Hinweises auf die Entscheidung über den Einspruch: **08.08.2001**
(45) Hinweis auf die Patenterteilung: 20.12.1995
(21) Anmeldenummer: 91115801.2
(22) Anmeldetag: 18.09.1991
(51) Int. Cl.: C08J 5/18, B32B 27/32, B29C 55/12, B29C 61/02

(54) **Transparente Schrumpffolie aus biaxial orientiertem Polypropylen für die Rundumetikettierung**
Transparent shrink film based on biaxially oriented polypropylene for circumferential labelling
Feuille transparente et rétrécissable en polypropylène orienté biaxialement pour étiquetage en circonférence

(30) Priorität: 26.09.1990 DE 4030385
(43) Veröffentlichungstag der Anmeldung: 01.04.1992
(73) Patentinhaber: Trespaphan GmbH, 66539 Neunkirchen (DE)
(72) Erfinder: Peiffer, Herbert, Dr., W-6500 Mainz-Finthen (DE); Murschall, Ursula, Dr., W-6505 Nierstein (DE); Schlögl, Gunter, Dr., W-6233 Kelkheim (DE)
(74) Vertreter: Luderschmidt, Schüler & Partner GbR

(56) Entgegenhaltungen:
- EP-A- 0 171 733
- EP-A- 0 313 406
- EP-A- 0 348 749
- GB-A- 1 069 450
- GB-A- 2 055 688
- JP-A- 57 077 533
- US-A- 4 406 721
- DIN 40634

## Beschreibung

Die vorliegende Erfindung betrifft eine Rolle aus biaxial orientierter transparenter Schrumpffolie aus Polypropylen. Die Erfindung betrifft ferner ein Verfahren zur Herstellung einer solchen Rolle sowie ihre Verwendung für die Rundumetikettierung von im wesentlichen zylindrischen Behältern, insbesondere Flaschen.

Für die Rundumetikettierung von im wesentlichen zylindrischen Behältern oder Flaschen werden derzeit hauptsächlich zwei Verfahren angewendet:
1. Die Verarbeitung einer Flachfolie erfolgt zunächst zu einem Schlauch bzw. zu Schlauchabschnitten, die dann über die Flasche gestülpt und anschließend im Schrumpfofen auf die Flasche aufgeschrumpft werden.
2. Die Verarbeitung der Folie erfolgt direkt von der Rolle, von der aus die Folie zunächst um die Flasche/den Behälter gewickelt und dann überlappend verklebt wird. Im anschließenden Schrumpfofen legt sich die Folie dicht an den Behälter an.

Für das erstgenannte Verfahren wird eine Folie mit einem hohen Schrumpf senkrecht zur Längsachse der Flasche benötigt; diese Richtung ist identisch mit der Querrichtung der Folie. Für das zweite Verfahren wird eine Folie mit einem erhöhten Schrumpf in Rollenrichtung benötigt; das heißt, der Schrumpf in Längsrichtung ist hier bevorzugt.

Die vorliegende Erfindung bezieht sich auf eine Folie, die sich für das zweite Verfahren eignet, bei der - zumindest im relevanten Temperaturbereich - ein hoher Längsschrumpf bei einem gleichzeitig niedrigen Querschrumpf realisiert ist.

Derzeit bestehen solche Folien zumeist aus Polyvinylchlorid oder Polystyrol und sind im allgemeinen längsgestreckt. Beide Materialien haben Nachteile; beim Polyvinylchlorid ist es der vergleichsweise hohe Preis durch die große Dichte, beim Polystyrol ist es der hohe Rezepturpreis für die Glasklaranwendung.

Andere Materialien, z. B. biaxial orientiertes Polypropylen, sind für obige Anwendung bisher noch nicht in großem Umfang eingesetzt worden. Auch bei diesem Material ist es theoretisch möglich, über eine reine Längsverstreckung die gewünschten Schrumpfeigenschaften in Längsrichtung zu erreichen. Diese Folie weist aber andererseits den Nachteil auf, daß sie schlechte mechanische Eigenschaften besitzt. Deshalb ist für die Verarbeitung auf schnellaufenden Maschinen (üblich sind heute 600 Stk./Min) eine höhere Foliendicke erforderlich. Die Folie ist dann vergleichsweise trüb und nicht glänzend; dies vermindert das werbewirksame Aussehen. Daneben neigt eine rein längsgestreckte Folie zum Spleißen in Längsrichtung, ein bei der Verarbeitung in hohem Maß unerwünschter Effekt. Außerdem hat eine längsgestreckte Folie zudem die generelle Eigenschaft, sich in Querrichtung, d. h. in senkrechter Richtung zur Schrumpfrichtung, unter Einwirkung von Wärme auszudehnen. Diese Eigenschaft kann zum Überstehen des Etikettes über den Rand des Behältnisses führen.

Die EP-A-0 348 749 beschrebt polyolefinische Schrumpffolien aus mindestens einer Schicht. Diese Schicht enthält Polyolefin und Harz. Die Folie besitzt ein Schrumpfvermögen in Querrichtung von mehr als 20 % bei 90 °C und in Längsrichtung von weniger als 8 % ebenfalls bei 90 °C. Diese Schrumpffolie wird zur Rundumetikettierung von Dosen und Flaschen eingesetzt.

Die GB-A-2 055 688 beschreibt eine schrumpffähige, siegelfähige Folie, welche aus einer Basisschicht und mindestens einer Deckschicht besteht. Die Deckschicht enthält mindestens zwei Polymere, ausgewählt aus der Gruppe der Polymere A, B und C. Polymer A ist ein Copolymer aus Propylen und Ethylen, welches 0,5 bis 10 % Ethylen enthält. Polymer B ist ein Copolymer aus Propylen und einem weiteren α-Olefin mit 4 bis 10 Kohlenstoffatomen mit einem α-Olefingehalt von 5 bis 30 %. Polymer C ist ein Copolymer aus Buten und einem weiteren α-Olefin mit 4 bis 10 Kohlenstoffatomen mit einem α-Olefingehalt von 1 bis 30 %. Die Folie zeichnet sich durch einen Schrumpf aus, der in Längs- und Querrichtung größer als 3,5 % ist.

Die Aufgabe der vorliegenden Erfindung bestand darin, eine transparente, gut verklebbare und in Längsrichtung gut schrumpfbare Mehrschichtfolie für Rundumetiketten auf Basis von Polypropylen zu entwickeln, die sehr gute optische und mechanische Eigenschaften hat und technische und wirtschaftliche Vorteile gegenüber Folien nach dem Stand der Technik ermöglicht. Daruber hinaus soll die Folie ihre Dimension in Querrichtung nicht verändern, wenn sie dem Schrumpfprozeß unterworfen wird.

Gelöst wird diese Aufgabe durch eine Folie der eingangs genannten Gattung, deren kennzeichnende Merkmale darin bestehen, daß sie als Hauptbestandteil ein Propylenpolymeres enthält und daß sie bei 100 °C einen Schrumpf in Längsrichtung von mindestens 10 % besitzt und der Schrumpf in Querrichtung kleiner als 2 % ist, wobei der Schrumpf nach DIN 40 634 bei einer Dauer von 15 min ermittelt wird und die Prozentangaben jeweils auf die Längenausdehnung der Folie vor dem Schrumpfprozeß bezogen sind.

Das Propylenpolymere ist bevorzugt ein isotaktisches Polypropylen mit einem n-heptanlöslichen Anteil von 15 Gew.-% oder weniger, wobei isotaktische Polypropylene mit einem n-heptanlöslichen Anteil von 2 bis 6 Gew.-% besonders bevorzugt sind. Geeignete Propylenpolymere besitzen zweckmäßigerweise einen Schmelzindex von 0,5 g/10 min bis 8 g/10 min bei 230 ° C und 21,6 N Belastung (bestimmt nach DIN 53 735), insbesondere von 1,5 g/10 min bis 4 g/10 min.

In einer bevorzugten Ausgestaltung enthält die erfindungsgemäße Folie das Propylenpolymere in einer Menge von 60 bis 95 Gew.-% und außerdem noch ein hydriertes Kohlenwasserstoffharz mit einem Erweichungspunkt im Bereich von 130 bis 180 °C in einer Menge von 5 bis 40 Gew.-%, wobei die Prozentangaben bezogen sind auf das Gesamtgewicht der Mischung. Bei dem in der Folie vorzugsweise enthaltenen Kohlenwasserstoffharz handelt es sich um ein niedrigmolekulares synthetisches Harz, das einen Erweichungspunkt in dem bevorzugten Bereich von 130 bis 160 ° C aufweist, bestimmt gemäß ASTM E28. Derartige Kohlenwasserstoffharze werden gewöhnlich aus harzbildenden Verbindungen wie Styrol, Methylstyrol, Vinyltoluol, Inden, Pentadien, Cyclopentadien u. ä. gebildet. Erfindungsgemäß werden insbesondere hydrierte Harze, insbesondere hydrierte Cyclopentadienharze, bevorzugt. Die Farbzahl nach Saybold (gemäß ASTM D 158) ist größer als 20, vorzugsweise größer als 25.

In einer weiterhin besonderen Ausgestaltungsform der Erfindung trägt die Folie beidseitig noch Deckschichten aus Propylen-Homopolymeren oder Ethylen-Propylen-Copolymeren.

Falls die Deckschichten aus Propylen-Homopolymeren bestehen, empfiehlt es sich, hier ein solches einzusetzen, welches einen höheren Schmelzindex hat als dasjenige der Basisschicht. Zudem sollte dann in der Deckschicht etwa der gleiche Harzanteil vorhanden sein wie in der Basisschicht.

Wird als Deckschicht ein Ethylen-Propylen-Copolymeres gewählt, so ist die Folie zusätzlich siegelfähig, was für bestimmte Anwendungsfälle von Vorteil ist. Die Abstimmung bezüglich der Schmelzindices soll hier ebenfalls so sein, daß das Material in der Deckschicht leichter fließend ist als dasjenige in der Basisschicht.

Das Propylenpolymere der Deckschichten ist ein isotaktisches Polypropylen mit einem n-heptanlöslichen Anteil von 15 Gew.-% oder weniger, wobei isotaktische Polypropylene mit einem n-heptanlöslichen Anteil von 2 bis 6 Gew.-% besonders bevorzugt sind. Für die Deckschichten geeignete Propylenpolymere sollen einen Schmelzindex im Bereich von 5 bis 20 g/10 Min aufweisen.

Für die Deckschichten geeignete Ethylen-Propylen-Copolymere sind statistische Copolymere und besitzen einen Ethylengehalt im Bereich von 2 bis 10 Gew.-%, vorzugsweise von 3 bis 6 Gew.-%

Das in den Deckschichten in den angegebenen Mengen enthaltene Harz kann prinzipiell das gleiche Harz sein wie es auch in der Basisschicht enthalten sein kann.

Die Deckschichten enthalten vorzugsweise noch zusätzlich ein anorganisches oder organisches Antiblockmittel. Geeignete Antiblockmittel sind anorganische Zusatzstoffe, z. B. Siliciumdioxid und Calciumcarbonat oder dergleichen. Wesentlich für das Antiblockmittel ist, daß die mittlere Teilchengröße zwischen 1,5 und 3 µm liegt und ihr Formfaktor < 3 ist, wobei unter dem Formfaktor des Antiblockmittels das Verhältnis von größter Deckfläche zur normierten Dicke der Teilchen zu verstehen ist. Entsprechend dieser Definition besitzt ein würfelförmiges Antiblockmittel einen Formfaktor von 1. Der Brechungsindex der Antiblockmittel liegt zwischen 1,4 und 1,6. SiO₂ und Calciumcarbonat sind als Antiblockmittel bevorzugt. Die Zusatzmenge beträgt 0,1 bis 0,5 Gew.-%.

Um bestimmte Eigenschaften der erfindungsgemäßen Schrumpffolie noch weiter zu verbessern, insbesondere was Verbesserungen des Laufverhaltens der Folie bei dem Herstellungs- oder Verarbeitungsprozeß angeht, können die Deckschichten geeignete Zusatzmittel in jeweils wirksamen Mengen enthalten, vorzugsweise Antistatika und/oder Gleitmittel.

Bevorzugte Antistatika sind im wesentlichen geradkettige und gesättigte aliphatische, tertiäre Amine mit einem aliphatischen Rest mit 10 bis 20 Kohlenstoffatomen, die mit 2-hydroxyalkyl-(C₁-C₄)-Gruppen substituiert sind, worunter N,N-bis-(2-hydroxyethyl)-alkylamine mit C₁₀-C₂₀, vorzugsweise C₁₂ - C₁₈, als Alkylgruppen besonders geeignet sind. Die wirksame Menge an Antistatikum liegt im Bereich von 0,05 bis 0,2 Gew.-%, bezogen auf die Schicht.

Beispiele für Gleitmittel sind höhere aliphatische Säureamide, höhere aliphatische Säureester, Wachse und Metallseifen sowie Polydimethylsiloxan. Die wirksame Menge an Gleitmittel liegt im Bereich von 0,1 bis 2 Gew.-%, bezogen auf das Gewicht der Schicht. Als besonders geeignet hat sich der Zusatz von höheren aliphatischen Säureamiden, z. B. Erucasäureamid, mit 0,15 bis 0,25 Gew.-% in der Basisschicht und/oder den Deckschichten erwiesen. Sehr gute Ergebnisse werden durch den Zusatz von Polydimethylsiloxan in eine oder beide Deckschichten erreicht. Die Zusatzmenge liegt zweckmäßig im Bereich von 0,3 bis 1,5 Gew.-%, wobei die Viskosität des Polydimethylsiloxans zwischen 1000 und 100 000 mm²/s liegt.

Die Gesamtdicke der erfindungsgemäßen Folie liegt im Bereich von 10 bis 50 µm, vorzugsweise von 20 bis 45 µm, wobei die Deckschichten eine Dicke von 0,2 bis 0,7 µm aufweisen.

Die im vorstehenden bezüglich ihrer chemischen Zusammensetzung beschriebene erfindungsgemäße Folie zeichnet sich insbesondere durch ganz besonders wünschenswerte Schrumpfeigenschaften aus. Sie besitzt nämlich ein Schrumpfvermögen von mehr als 10 % bei 100 °C und von mehr als 20 % bei 120 °C in Längsrichtung und gleichzeitig ein Schrumpfvermögen von weniger als 2 % bei 100 °C und von weniger als 10 % bei 120 °C in Querrichtung, wobei die Prozentangaben jeweils bezogen sind auf die jeweilige Längenausdehnung der Folie vor dem Schrumpfprozeß. Die angegebenen Schrumpfwerte sind jeweils im Umluftofen bei einer Dauer von 15 min gemäß DIN 406 34 ermittelt worden. Vorzugsweise liegt das Schrumpfvermögen der erfindungsgemäßen Folie in Längsrichtung in einem Bereich von 14 bis 18 % bei 100 °C und von 25 bis 30 % bei 120 °C und in Querrichtung in einem Bereich von maximal 0 bis 2 % bei 100 °C und von maximal 3. bis 7 % bei 120 °C, jeweils bezogen auf die Längenausdehnung der Folie vor dem Schrumpfprozeß.

Neben den bereits beschriebenen Schrumpfeigenschaften besitzt die erfindungsgemäße Folie zusätzlich noch in besonders hohem Maße vorteilhafte mechanische Eigenschaften. Der Elastizitätsmodul wird mit einem Zug-Dehnungsgerät der Firma Zwick in Ulm-Einsingen des Typs 1445 gemäß DIN 53 455 bestimmt. Die erfindungsgemäße Folie besitzt danach einen E-Modul in Längsrichtung von mehr als 2800 N/mm², bevorzugt von 3000 bis 3300 N/mm², und einen E-Modul in Querrichtung von mehr als 2500 N/mm², vorzugsweise von 2800 N/mm² bis 3300 N/mm².

Ein anderer physikalischer Parameter, der die mechanischen Eigenschaften der erfindungsgemäßen Folie verdeutlicht, ist die Reißfestigkeit, die ebenfalls nach DIN 53 455 bestimmt wird. Die Schrumpffolie gemäß der Erfindung weist eine Reißfestigkeit in Längsrichtung von mehr als 170 N/mm², vorzugsweise im Bereich von 180 bis 200 N/mm², auf und in Querrichtung von mehr als 150 N/mm², vorzugsweise im Bereich von 160 bis 180 N/mm².

Insbesondere die optischen Eigenschaften der erfindungsgemäßen Folie sind sehr hervorragend. Der Glanzwert liegt im Bereich von 110 bis 130, bestimmt nach DIN 67 530 bzw. ASTM-D 523, und die Trübung der Folie beträgt weniger als 20 %, vorzugsweise 10 bis 15 %, wobei die Trübung der Folie in Anlehnung an ASTM-D 1003-52 gemessen wird. Anstelle einer 4°-Lochblende wird eine 1°-Spaltblende eingesetzt, und die Trübung in Prozent wird für vier übereinanderliegende Folienanlagen angegeben. Die vier Lagen wurden gewählt, da man hierdurch den optimalen Meßbereich ausnutzt. Der besonders hohe Glanzwert der erfindungsgemäßen Folie wirkt sich insbesondere sehr werbewirksam aus, und deshalb ist das Einsatzgebiet der erfindungsgemäßen Folie vor allem dort zu sehen, wo an das Produkt (Dose/Flasche/Spender) hohe optische Anforderungen gestellt werden.

Die eingangs genannte Aufgabe der Erfindung wird auch durch ein Verfahren zur Herstellung der vorstehend beschriebenen Folie gelöst. Das erfindungsgemäße Verfahren besteht darin, daß mittels Extrusion bzw. Coextrusion in einer Breitschlitzdüse zunächst eine Vorfolie hergestellt wird, die dann auf einer Kühlwalze verfestigt und daran anschließend in Längs- und Querrichtung durch Strecken orientiert wird. Erfindungsgemäß werden die Bedingungen in der Längsstreckung so gewählt, daß die längsgestreckte Folie hoch orientiert ist. Die Voraussetzungen für die Erzielung eines hohen Längsschrumpfes und eines niedrigen Querschrumpfes sind dann besonders günstig. Ein gebräuchliches Maß für die Beurteilung des Ausmaßes der Orientierung der längsgestreckten Folie ist die Doppelbrechung n. Die erfindungsgemäße Folie zeichnet sich dadurch aus, daß die Doppelbrechung der längsgestreckten, aber noch nicht quergestreckten Folie einen Wert von Δn = 25•10⁻³ übersteigt. Vorzugsweise sollte die Doppelbrechung Δn >30•10⁻³ betragen. Die Längsstreckung wird durchgeführt bei einer Temperatur von weniger als 110 ° C, vorzugsweise im Bereich von 90 bis 105 °C, und mit einem Streckverhältnis von größer 6,5 , vorzugsweise im Bereich von 7,5 - 8,5.

Günstige Querstrecktemperaturen liegen dabei im Bereich > 140 °C vorzugsweise größer 145 - 150 °C. Das Querstreckverhältnis soll andererseits einen Wert von 8:1 nicht überschreiten. Bevorzugt wird hier ein Bereich < 7:1.

Nach der Streckung der Folie in Querrichtung schließt sich eine abschließende Fixierstufe an. Dabei wird die Folie bei einer Temperatur von 20 bis 40 ° C unterhalb der Strecktemperatur, insbesondere bei einer Temperatur unterhalb von 130 °C, vorzugsweise von unterhalb von 120 °C, in dem Streckrahmen, konvergierend, weitergeführt. Durch die Konvergenz wurde überraschenderweise eine weitere Zunahme des Längsschrumpfes (auf Kosten des Querschrumpfes) festgestellt.

Die Bedruckbarkeit bzw. Verklebbarkeit der Folie wird durch eine der üblichen Oberflächenbehandlungen vor dem Aufrollen erreicht, z. B. Flammbehandlung oder elektrische Coronabehandlung. Die Flammbehandlung wird dabei bevorzugt angewandt, wenn die Deckschichten aus PP-Homopolymer bestehen. Bei Deckschichten aus PE/PP-Copolymeren können beide Verfahren alternativ eingesetzt werden. Die Behandlungsintensitäten liegen im üblichen Rahmen. Behandlungsintensitäten von 38 bis 42 mN/m sind bevorzugt.

Die so hergestellte Schrumpffolie besitzt eine Kombination von Eigenschaften, die sie in besonders hohem Maß geeignet macht für ihren bestimmungsgemäßen Verwendungszweck als Folie für Rundumetiketten. Ihr bevorzugtes Einsatzgebiet ist vor allem dort zu sehen, wo die Gestaltänderung der Dose oder Flasche im Bereich der Etikettierung weniger als 10 % ausmacht.

Die im vorstehenden in allen Einzelheiten beschriebene erfindungsgemäße Folie soll nachfolgend durch ein Ausführungsbeispiel noch deutlicher erläutert werden.

### Beispiel

Eine mehrschichtige Folie bestehend aus einer Basisschicht aus 80 Gew.-% isotaktischem Polypropylen und 20 Gew.-% hydriertem Cyclopentadienharz mit einer Erweichungstemperatur von 140 °C und Deckschichten aus isotaktischem Polypropylen, dem 0,3 Gew.-% eines CaCO₃ mit einer mittleren Teilchengröße von 2 um und einem Formfaktor von 1, 0,5 Gew.-% N,N-bis-ethoxyalkylamin (^{(R)}Armostat 300) und 0,5 Gew.-% Polydimethylsiloxan (Viskosität 30 000 cSt) beigegeben waren, wurde über die Verfahrensschritte Coextrusion, Abkühlen, Längsstreckung, Querstreckung, Fixierung hergestellt. Die Gesamtdicke der Folie betrug 40 µm, wobei die Deckschichten jeweils ca. 0,5 um dick waren. Die Herstellungsbedingungen in den einzelnen Verfahrensschritten waren:
Extrusion:
   Temperatur der Schmelzen 220 ° C
   Temperatur der Abzugswalze 60 ° C
   Längsstreckung:
   Temperatur T = 100 °C
   Längsstreckverhältnis λ_{L} = 7,5
Querstreckung:
   Temperatur T = 150 ° C
   Querstreckverhältnis λ_{Q} = 6,5
Fixierung:
   Temperatur T = 120 °C
   Zeitdauer t = 1 s
   Konvergenz = 20 %

Die auf diese Weise hergestellte Folie besaß die in der Tabelle aufgelisteten Eigenschaften (erste Zeile). Die Folie wurde vor der Aufrollung einer Flammbehandlung unterzogen, um eine Bedruckbarkeit/Verklebbarkeit zu gewährleisten. Die Behandlungsintensität betrug 39 mN/m.

In der Tabelle ist der erfindungsgemäßen Folie eine monoaxial orientierte PP-Folie gegenübergestellt. Ein Vergleich der ausgewiesenen Eigenschaften zeigt, daß sich die erfindungsgemäße Folie insbesondere im Hinblick auf die aufgabengemäß angestrebte Eigenschaftskombination der monoaxial gestreckten Folie als deutlich überlegen erweist.

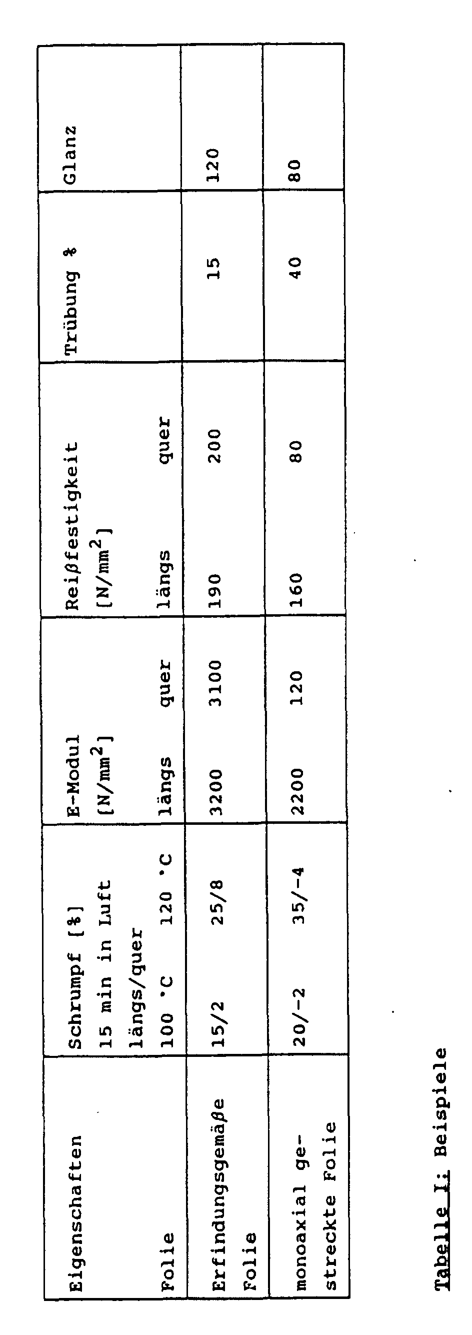

## Patentansprüche

1. Rolle aus biaxial oriender Transparenter Schrumpffolie aus Polypropylen, dadurch gekennzeichnet, daß sie als Hauptbestandteil, ein Propylenpolymeres enthält und daß sie bei 100 °C einen Schrumpf in Längsrichtung d.h. in Rollenrichtung von mindestens 10 % besitzt und der Schrumpf in Querrichtung kleiner als 2 % ist. wobei der Schrumpf nach DIN 40 634 bei einer Dauer von 15 min ermittelt wird und die Prozentangaben jeweils auf die Längenausdehnung der Folie vor dem Schrumpfprozeß bezogen sind.

2. Rolle nach Anspruch 1, dadurch gekennzeichnet, daß das Propylenpolymere ein isotaktisches Polypropylen mit einem n-heptanlöslichen Anteil von 15 Gew.-% oder weniger, vorzugsweise von 2 bis 6 Gew.-%, ist.

3. Rolle nach Anspruch 1 oder 2, dadurch gekennzeichnet, daß sie das Propylenpolymere in einer Menge von 60 bis 95 Gew.-% enthält und ein hydriertes Kohlenwasserstoffharz mit einem nach ASTM E28 bestimmten Erweichungspunkt im Bereich von 130 bis 180 °C in einer Menge 5 bis 40 Gew.-%, wobei die Prozentangaben bezogen sind auf das Gesamtgewicht der Mischung.

4. Rolle nach Anspruch 3, dadurch gekennzeichnet, daß das Kohlenwasserstoffharz ein niedrigmolekulares synthetisches Harz ist, das einen Erweichungspunkt im Bereich von 130 bis 160 °C besitzt.

5. Rolle nach einem der Ansprüche 1 bis 4, dadurch gekennzeichnet, daß sie beidseitig Deckschichten aus Propylen-Homopolymerem oder Ethylen-Propylen-Copolymeren trägt.

6. Rolle nach Anspruch 5, dadurch gekennzeichnet, daß das Propylen-Homopolymere einen Schmelzindex im Bereich von 5 bis 20 g/10 min aufweist, wobei der Schmelzindex nach DIN 53 735 bei 230 °C und 21,6 N Belastung gemessen wird.

7. Rolle nach Anspruch 6, dadurch gekennzeichnet, daß die Deckschichten Propylen-Homopolymer und bis zu 40 Gew.-% Kohlenwasserstoffharz enthalten, wobei der Harzanteil der Deckschichten in etwa so groß ist wie in der Basisschicht.

8. Rolle nach Anspruch 5, dadurch gekennzeichnet. daß die Deckschichten Ethylen-Propylen-Copolymer enthalten und der Schmelzindex des Ethylen-Propylen-Copolymeren höher ist als der Schmelzindex des Propylenpolymeren der Basisschicht.

9. Rolle nach Anspruch 8, dadurch gekennzeichnet, daß das Ethylen-Propylen-Copolymer ein statistisches Copolymer ist und einen Ethylengehalt im Bereich von 2 bis 10 Gew.-% besitzt.

10. Rolle nach einem der Ansprüche 1 bis 9, dadurch gekennzeichnet, daß die Deckschichten zusätzlich ein Antiblockmittel enthalten.

11. Rolle nach Anspruch 10, dadurch gekennzeichnet, daß das Antiblockmittel Siliciumdioxid oder Calciumcarbonat mit einer mittleren Teilchengröße zwischen 1,5 und 3 µm ist und in einer Zusatzmenge von 0,1 bis 0,5 Gew.-% enthalten ist.

12. Rolle nach einem der Ansprüche 1 bis 11, dadurch gekennzeichnet, daß ihre Gesamtdikke im Bereich von 10 bis 50 µm liegt, vorzugsweise von 20 bis 45 µm, wobei die Deckschichten eine Dicke von 0,2 bis 0,7 µm aufweisen.

13. Rolle nach einem der Ansprüche 1 bis 12, dadurch gekennzeichnet, daß sie ein Schrumpfvermögen von mehr als 10 % bei 100 °C und von mehr als 25 % bei 120 C in Längsrichtung und gleichzeitig ein Schrumpfvermögen von weniger als 2% bei 100 °C und von weniger als 10 % bei 120 °C in Querrichtung besitzt.

14. Rolle nach einem der Ansprüche 1 bis 13, dadurch gekennzeichnet, daß sie einen Elastizitätsmodul, bestimmt nach DIN 53 455, in Längsrichtung von mehr als 2,800 N/mm² und einen Elastizitätsmodul in Querrichtung von mehr als 2 500 N/mm² besitzt.

15. Rolle nach Anspruch 14, dadurch gekennzeichnet, daß der Elastizitätsmodul in Längsrichtung im Bereich von 3 000 bis 3 300 N/mm² und in Querrichtung im Bereich von 2 800 bis 3 300 N/mm² liegt.

16. Rolle nach einem der Ansprüche 1 bis 15, dadurch gekennzeichnet, daß sie eine Reißfestigkeit, bestimmt nach DIN 53 455, in Längsrichtung von mehr als 170 N/mm² und in Querrichtung von mehr als 150 N/mm² besitzt.

17. Rolle nach Anspruch 16, dadurch gekennzeichnet, daß die Reißfestigkeit in Längsrichtung im Bereich von 180 bis 200 N/mm² und in Querrichtung im Bereich von 160 bis 180 N/mm² liegt.

18. Verfahren zur Herstellung einer Rolle nach einem der Ansprüche 1 bis 17, bei dem mittels Extrusion bzw. Coextrusion in einer Breitschlitzdüse zunächst eine Vorfolie hergestellt wird, die dann auf einer Kühlwalze verfestigt und daran anschließend in Längs- und Querrichtung durch Strecken orientiert wird, dadurch gekennzeichnet, daß die Doppelbrechung der längsgestreckten, aber noch nicht quergestreckten Folie einen Wert von Δn = 25 • 10⁻³ übersteigt, wobei die Längsstreckung bei einer Temperatur von weniger als 110 °C und mit einem Streckverhältnis von größer 6,5 durchgeführt wird.

19. Verfahren nach Anspruch 18, dadurch gekennzeichnet, daß die Längsstreckung bei einer Temperatur im Bereich von 90 bis 105 ° C und mit einem Streckverhältnis im Bereich von 7,5 bis 8,5 durchgeführt wird.

20. Verfahren nach Anspruch 18 oder 19, dadurch gekennzeichnet, daß die Doppelbrechung Δn >30 • 10⁻³ beträgt.

21. Verfahren nach Anspruch 18, 19 oder 20, dadurch gekennzeichnet, daß die Querstrecktemperatur im Bereich > 140 °C liegt, wobei das Querstreckverhältnis höchstens 8:1 ist.

22. Verfahren nach Anspruch 21, dadurch gekennzeichnet, daß die Querstrecktemperatur im Bereich von 145 bis 150 °C liegt und das Querstreckverhältnis <7:1 ist.

23. Verwendung einer Rolle nach einem der Ansprüche 1 bis 17 zur Rundumetikettierung von zylindrischen Gefäßen.

24. Verwendung nach Anspruch 23, dadurch gekennzeichnet, daß die zylindrischen Gefäße Flaschen sind.

## Claims

1. A transparent roll of biaxially oriented shrink film made from polypropylene, which comprises, as principal constituent, a propylene polymer and has, at 100°C, a shrinkage in the longitudinal direction, that is to say in the roll direction, of at least 10 %, and the shrinkage in the transverse direction is less than 2 %, the shrinkage being determined in accordance with DIN 40 634 for a time of 15 minutes and the percentages in each case being based on the length extension of the film before the shrinking process.

2. A roll as claimed in claim 1, wherein the propylene polymer is an isotactic polypropylene having an n-heptane-soluble content of 15 % by weight or less, preferably of from 2 to 6 % by weight.

3. A roll as claimed in claim 1 or 2, which comprises the propylene polymer in an amount of from 60 to 95 % by weight and a hydrogenated hydrocarbon resin having a softening point, determined in accordance with ASTM E28, in the range from 130 to 180°C in an amount of from 5 to 40 % by weight, the percentages being based on the total weight of the mixture.

4. A roll as claimed in claim 3, wherein the hydrocarbon resin is a low-molecular-weight synthetic resin which has a softening point in the range from

5. A roll as claimed in any one of claims 1 to 4, which carries outer layers of propylene homopolymer or ethylene-propylene copolymer on both sides.

6. A roll as claimed in claim 5, wherein the propylene homopolymer has a melt flow index in the range from 5 to 20 g/10 min, the melt flow index being measured in accordance with DIN 53 735 at 230°C and a load of 21.6 N.

7. A roll as claimed in claim 6, wherein the outer layers comprise propylene homopolymer and up to 40 % by weight of hydrocarbon resin, the resin content in the outer layers being approximately the same as in the base layer.

8. A roll as claimed in claim 5, wherein the outer layers comprise ethylene-propylene copolymer and the melt flow index of the ethylene-propylene copolymer is higher than the melt flow index of the propylene polymer of the base layer.

9. A roll as claimed in claim 8, wherein the ethylene-propylene copolymer is a random copolymer and has an ethylene content in the range from 2 to 10 % by weight.

10. A roll as claimed in any one of claims 1 to 9, wherein the outer layers additionally contain an antiblocking agent.

11. A roll as claimed in claim 10, wherein the antiblocking agent is silicon dioxide or calcium carbonate having a mean particle size of between 1.5 and 3 µm, and is present in an added amount of from 0.1 to 0.5 % by weight.

12. A roll as claimed in any one of claims 1 to 11, with an overall thickness in the range from 10 to 50 µm, preferably from 20 to 45 µm, the outer layers having a thickness of from 0.2 to 0.7 µm.

13. A roll as claimed in any one of claims 1 to 12, which has a shrink capacity of greater than 10 % at 100°C and greater than 25 % at 120°C in the longitudinal direction and at the same time a shrink capacity of less than 2 % at 100°C and less than 10 % at 120°C in the transverse direction.

14. A roll as claimed in any one of claims 1 to 13, which has a modulus of elasticity, determined in accordance with DIN 53 455, in the longitudinal direction of greater than 2800 N/mm² and a modulus of elasticity in the transverse direction of greater than 2500 N/mm².

15. A roll as claimed in claim 14, wherein the modulus of elasticity in the longitudinal direction is in the range from 3000 to 3300 N/mm² and in the transverse direction in the range from 2800 to 3300 N/mm².

16. A roll as claimed in any one of claims 1 to 15, which has a tear strength, determined in accordance with DIN 53 455, in the longitudinal direction of greater than 170 N/mm² and in the transverse direction of greater than 150 N/mm²

17. A roll as claimed in claim 16, wherein the tear strength in the longitudinal direction is in the range from 180 to 200 N/mm² and in the transverse direction in the range from 160 to 180 N/mm².

18. A process for the production of a roll as claimed in any one of claims 1 to 17, in which first a prefilm is produced by extrusion or coextrusion in a flat film die, the prefilm is then compacted on a chill roll and subsequently oriented in the longitudinal and transverse directions by stretching, wherein the birefringence of the longitudinally stretched, but as yet transversely unstretched film exceeds a value of Δn = 25 • 10⁻³, the longitudinal stretching being carried out at a temperature of less than 110 °C and at a stretching ratio of greater than 6.5.

19. The process as claimed in claim 18, wherein the longitudinal stretching is carried out at a temperature in the range from 90 to 105°C and at a stretching ratio in the range from 7.5 to 8.5.

20. The process as claimed in claim 18 or 19, wherein the birefringence Δn is > 30 • 10⁻³.

21. The process as claimed in claim 18, 19 or 20, wherein the transverse stretching temperature is in the range > 140°C, with the transverse stretching ratio being at most 8:1.

22. The process as claimed in claim 21, wherein the transverse stretching temperature is in the range from 145 to 150°C and the transverse stretching ratio is < 7:1.

23. The use of a roll as claimed in any one of claims 1 to 17 for all-round labeling of cylindrical containers.

24. The use as claimed in claim 23, wherein the cylindrical containers are bottles.

## Revendications

1. Rouleau formé d'une pellicule rétractable transparente à base de polypropylène à orientation biaxiale, caractérisé en ce qu'elle contient un polymère de propylène en tant que composant principal, et en ce qu'elle présente à 100°C un retrait dans le sens longitudinal, c'est-à-dire dans le sens du rouleau d'au moins 10 %, et le retrait dans le sens transversal est inférieur à 2 %, le retrait étant déterminé selon DIN 40 634, pendant une durée de 15 minutes, et les pourcentages étant donnés chacun par rapport à la dimension longitudinale de la pellicule avant le processus de retrait.

2. Rouleau selon la revendication 1, caractérisé en ce que le polymère de propylène est un polypropylène isotactique ayant une fraction soluble dans le n-heptane de 15 % en poids ou moins, de préférence de 2 à 6 % en poids.

3. Rouleau selon la revendication 1 ou 2, caractérisé en ce qu'il contient un polymère de propylène en une proportion de 60 à 95 % en poids, et une résine hydrocarbonée hydrogénée, ayant un point de ramollissement, déterminé selon ASTM E28, dans la plage allant de 130 à 180°C, en une proportion de 5 à 40 % en poids, les pourcentages étant donnés par rapport au poids total du mélange.

4. Rouleau selon la revendication 3, caractérisé en ce que la résine hydrocarbonée est une résine synthétique à faible masse moléculaire, qui présente un point de ramollissement dans la plage allant de 130 à 160°C.

5. Rouleau selon l'une des revendications 1 à 4, caractérisé en ce qu'il porte des deux côtés des couches de recouvrement à base d'homopolymère de propylène ou de copolymères éthylène/propylène.

6. Rouleau selon la revendication 5, caractérisé en ce que l'homopolymère de propylène présente un indice de fluidité à chaud dans la plage allant de 5 à 20 g/10 min, l'indice de fluidité à chaud étant mesuré selon DIN 53 735, à 230°C et sous une charge de 21,6 N.

7. Rouleau selon la revendication 6, caractérisé en ce que les couches de recouvrement contiennent un homopolymère de propylène et jusqu'à 40 % en poids d'une résine hydrocarbonée, la teneur en résine des couches de recouvrement étant approximativement aussi élevée que celle de la couche de base.

8. Rouleau selon la revendication 5, caractérisé en ce que les couches de recouvrement contiennent un copolymère éthylène/propylène et l'indice de fluidité à chaud du copolymère éthylène/propylène est supérieur à l'indice de fluidité à chaud du polymère de propylène de la couche de base.

9. Rouleau selon la revendication 8, caractérisé en ce que le copolymère éthylène/propylène est un polymère statistique et présente une teneur en éthylène dans la plage allant de 2 à 10 % en poids.

10. Rouleau selon l'une des revendications 1 à 9, caractérisé en ce que les couches de recouvrement contiennent en outre un agent anti-adhérence de contact.

11. Rouleau selon la revendication 10, caractérisé en ce que l'agent anti-adhérence de contact est une silice ou un carbonate de calcium ayant une taille moyenne de particules comprise entre 1,5 et 3 µm, et est contenu en une quantité ajoutée de 0,1 à 0,5 % en poids.

12. Rouleau selon l'une des revendications 1 à 11, caractérisé en ce que son épaisseur totale est dans la plage allant de 10 à 50 µm, de préférence de 20 à 45 µm, les couches de recouvrement présentant une épaisseur de 0,2 à 0,7 µm.

13. Rouleau selon l'une des revendications 1 à 12, caractérisé en ce qu'il a un pouvoir de retrait de plus de 10 % à 100°C et de plus de 25 % à 120°C dans le sens longitudinal, et en même temps un pouvoir de retrait de moins de 2 % à 100°C et de moins de 10 % à 120°C dans le sens transversal.

14. Rouleau selon l'une des revendications 1 à 13, caractérisé en ce qu'il présente un module d'élas-ticité, déterminé selon DIN 53 455, dans lè sens longitudinal, de plus de 2 800 N/mm², et un module d'élas-ticité dans le sens transversal de plus de 2 500 N/mm².

15. Rouleau selon la revendication 14, caractérisé en ce que le module d'élasticité dans le sens longitudinal est dans la plage allant de 3 000 à 3 300 N/mm² et, dans le sens transversal, dans la plage de 2 800 à 3 300 N/mm².

16. Rouleau selon l'une des revendications 1 à 15, caractérisé en ce qu'il présente une résistance à la déchirure, déterminée selon DIN 53 455, dans le sens longitudinal, de plus de 170 N/mm² et, dans le sens transversal de plus de 150 N/mm².

17. Rouleau selon la revendication 16, caractérisé en ce que la résistance à la déchirure dans le sens longitudinal se situe dans la plage allant de 180 à 200 N/mm² et, dans le sens transversal se situe dans la plage allant de 160 à 180 N/mm².

18. Procédé pour la fabrication d'un rouleau selon l'une des revendications 1 à 17, dans lequel on fabrique d'abord, par extrusion ou coextrusion dans une filière plate, une pellicule préliminaire, qui est ensuite solidifiée sur un cylindre refroidisseur, puis orientée dans le sens longitudinal et dans le sens transversal, caractérisé en ce que la biréfringence de la pellicule étirée longitudinalement mais non encore étirée transversalement excède une valeur de Δn = 25.10⁻³, l'étirage longitudinal étant effectué à une température de moins de 110°C et avec un rapport d'étirage de plus de 6,5.

19. Procédé selon la revendication 18, caractérisé en ce que l'étirage longitudinal est effectué à une température dans la plage allant de 90 à 105 °C et avec un rapport d'étirage dans la plage allant de 7,5 à 8,5.

20. Procédé selon la revendication 18 ou 19, caractérisé en ce que la biréfringence s'élève à Δn > 30.10⁻³.

21. Procédé selon la revendication 18, 19 ou 20, caractérisé en ce que la température d'étirage transversal se situe dans la plage > 140°C, le rapport d'étirage transversal étant au maximum de 8:1.

22. Procédé selon la revendication 21, caractérisé en ce que la température d'étirage transversal se situe dans la plage allant de 145 à 150°C, et le rapport d'étirage transversal à < 7:1.

23. Utilisation d'un rouleau selon l'une des revendications 1 à 17, pour l'étiquetage en circonférence de récipients cylindriques.

24. Utilisation selon la revendication 23, caractérisée en ce que les récipients cylindriques sont des bouteilles.
